# EUROPÄISCHE PATENTSCHRIFT

(11) **EP 2 280 598 B1**
(45) Veröffentlichungstag und Bekanntmachung des Hinweises auf die Patenterteilung: **29.02.2012**
(21) Anmeldenummer: 09749499.1
(22) Anmeldetag: 25.05.2009
(51) Int. Cl.: A01K 97/12

(54) **AUTOMATISCHER BISSANZEIGER ZUM ANGELN VON FISCHEN**
AUTOMATIC BITE DISPLAY FOR ANGLING FISH
INDICATEUR DE TOUCHE AUTOMATIQUE POUR LA PÊCHE À LA LIGNE DE POISSONS

(30) Priorität: 23.05.2008 DE 102008024770
(43) Veröffentlichungstag der Anmeldung: 09.02.2011
(73) Patentinhaber: Miskatovic, Zeljko, 80993 München (DE)
(72) Erfinder: Miskatovic, Zeljko, 80993 München (DE)
(74) Vertreter: Franke, Dirk
(86) Internationale Anmeldenummer: PCT/DE2009/000741
(87) Internationale Veröffentlichungsnummer: WO 2009/140957

(56) Entgegenhaltungen:
- DE-U1-202005 000 132
- FR-A- 2 797 562
- GB-A- 2 426 683

## Beschreibung

Die Erfindung bezieht sich auf einen automatischen Bissanzeiger zur Anzeige des Anbisses eines Fisches an einem Köder, der an der Angelschnur einer auf einem Angelrutenhalter aufsetzbaren Angel mit einer Rolle zum Aufrollen der Angelschnur angebracht ist.

Ein handelsüblicher Bissanzeiger dieser Art reagiert auf Zugbewegungen der Angelschnur, wobei diese ein Rad antreibt, das wiederum eine Lichtschranke anspricht, die ein Bisssignal auslöst. Ein anderer Bissanzeiger weist ein Rad auf, das magnetische Streifen besitzt und einen Reed-Kontakt ein- und ausschaltet. In beiden Fällen existiert bei der Bisserkennung ein gewisser Schlupf.

Gegenstand der EP 0422 913 B1 ist ein Bissanzeiger mit einem mechanisch arbeitenden Sensor. Konstruktion und Aufbau dieses Sensors sind ziemlich aufwändig und somit teuer. Außerdem vermindert die Komplexität und Kompliziertheit dieses Bissanzeigers die Freude am Gebrauch desselben und erhöht dessen Herstellungskosten und seinen Kaufpreis nicht unwesentlich.

Die britische Offenlegungsschrift GB 2 426 683 A offenbart einen Fischbiss-Anzeiger, umfassend einen Kopf mit Eingreifmittel zum Eingreifen einer Angelleine bei Gebrauch des Anzeigers, wobei der Kopf ein Detektionsmittel aufweist, welches ein eine Bewegung des Kopfes anzeigendes Signals ausgeben kann, und ein Befestigungsmittel aufweist, welches es ermöglicht, dass der Indikator an einem im Allgemeinen aufrechten Bankstock befestigt werden kann, wobei der Kopf an einem Ende eines unnachgiebigen Arms gesichert ist und dessen anderes Ende an dem Befestigungsmittel drehbar befestigt ist.

Die französische Offenlegungsschrift FR 2 797 562 offenbart einen Berührungsdetektor umfassend Alarmmittel und Berührungsdetektionsmittel, die die Auslösung der Alarmmittel erlauben, wobei die Detektionsmittel wenigstens einen Schalter (fr. "contacteur") umfassen, der dazu geeignet ist, sich in Funktion seiner räumlichen Orientierung zu öffnen oder zu schließen.

Die deutsche Gebrauchsmusterschrift DE 20 2005 000 132 U1 offenbart eine Vorrichtung zur Anzeige eines Fallbisses beim Angeln mit einer Anzeigevorrichtung mit einer Aufnahme für eine Angelschnur, wobei die Anzeigevorrichtung derart an der Angelschnur anordbar ist, dass die Anzeigevorrichtung im Falle eines Fallbisses als eine aufgrund des Nachgebens der Angelschnur im Wesentlichen vertikalabwärts bewegende Anzeigevorrichtung ausgebildet ist, wobei die maximale Auslenkung aus der Vertikalen 100° beträgt, wobei die Vorrichtung eine Halte- und Befestigungsvorrichtung mit einer Aufnahme aufweist, in der ein die Anzeigevorrichtung tragender Stab einhängbar ist.

Mit den bekannten Bissanzeigem können kleinste Anbisse vom Angler in befriedigender Weise praktisch überhaupt nicht oder nur schwach erkennbar erkannt werden. Des Weiterem muss die Angelschnur eng am Rad geführt werden, was wiederum eine Führung für die Angelrute erforderliche macht. Diese Bauteile erhöhen Gewicht und Größe der bekannten Bissanzeiger-Gehäuse. Außerdem ist deren Montage aufwändig und deren Handhabung problematisch, um eine optimale und sichere Bisserkennung zu gewährleisten.

Ein weiterer Nachteil der bekannten Bissanzeiger besteht darin, dass ein Fallbiss ohne einen zusätzlichen Aufbau mit einem so genannten "Swinger" nicht auskommt. Im Fall, dass ein Fallbiss vorerst unerkannt bleibt (z.B. nachts beim Fischen), hat der Angler keine weitere Möglichkeit diesen Zustand zu erkennen, um den Aufbau der Angelrute zu korrigieren.

Der Erfindung liegt daher die Aufgabe zugrunde, einen Bissanzeiger zu schaffen, dessen Aufbau einfach ist, dessen Größe und Gewicht klein sind, der insgesamt aus nur wenigen Bauteilen besteht, der leicht zu montieren und problemlos zu handhaben ist, der mit der Angelschnur auf einfachste Art koppelbar ist, der schlupflos arbeitet und auf kleinste und kürzeste Bisse nur über die Zuckungen und/oder Bewegungen an der Angelschnur anspricht und der dann entsprechende, vom Angler wahrnehmbare optische und/oder akustische Signale auslöst. Durch einfache Bauweise des zu schaffenden Bissanzeigers zum Erkennen eines Fallbisses soll dieser ohne zusätzliche weitere Aufbauten auskommen, um dem Angler einen Fallbiss dauerhaft und 100%-ig sicher anzuzeigen.

Diese Aufgabe wird gemäß der Erfindung und den Merkmalen des Anspruchs 1 dadurch gelöst, dass der Sensor des Bissanzeigers ein elektronischer Beschleunigungssensor ist, dass der Bissanzeiger zwischen dem Angelrutenhalter und der Angelrutenablage befestigte Konsole aufweist, die in Gebrauchslage in etwa horizontal vorspringt und in etwa parallel zur Angelrute verläuft, dass an der Konsole eine in Gebrauchslage horizontal verlaufende, um die Schwenkachse herum schwenkbare Schwenkwelle vorgesehen ist, dass an der Schwenkwelle ein erstes Ende eines Schwenkarms schwenkbar gelagert ist, dessen anderes Ende das Gehäuse des Bissanzeigers trägt, dass am in Gebrauchslage (Ruhelage) oberen Kopfteil des Gehäuses des Bissanzeigers ein Schnur-Clipsystem angebracht ist, das an der in Gebrauchslage (Ruhelage) gespannten Angelschnur vorübergehend lösbar anhängbar ist, wobei die Hochachse des Gehäuses des Bissanzeigers im Wesentlichen vertikal verläuft, dass das Gehäuse des am Schnur-Clipsystem hängenden, am Schwenkarm befestigten Bissanzeigers während der Entspannung und des Durchhängens der Angelschnur infolge einer Anbisses des Fisches am Angelköder durch seine Schwerkraft um die Schwenkachse um etwa 90° nach unten schwenkbar ist, wonach die Hochachse des Gehäuses des Bissanzeigers im Wesentlichen horizontal verläuft, und dass der Beschleunigungssensor im Gehäuse des Bissanzeigers angeordnet ist, wo er Bewegungen, Erschütterungen oder ein Herunterschwenken des Bissanzeigers registriert und dies zugleich in geeignete elektronische Stromimpulse für Anzeigegerate umsetzt, die dem Angler akustische und/oder optische Signale geben.

Im Gegensatz zum Gegenstand der EP 0422 913 B1 weist der erfindungsgemäße Bissanzeiger einen elektronischen Sensor auf. Dieser Bissanzeiger ist aus nur wenigen Einzelteilen konstruktiv einfach aufgebaut. Anzeigegeräte des erfindungsgemäßen Bissanzeigers signalisieren dem Angler das erwartete Biss-Ereignis in Form akustischer und/oder optischer Signale. Er ist unkompliziert und kostengünstig herstellbar und wegen seiner Leichtbauweise, leichter Handhabbarkeit und zuverlässiger Arbeitsweise von Anglern sehr geschätzt.

Da der Bissanzeiger mit seinem Eigengewicht an der Angelschnur hängt, wird zur Erkennung eines Fallbisses kein zusätzliches Gewicht (Swinger) benötigt. Der Beschleunigungssensor ist im Gehäuse des Bissanzeigers fest montiert. Das heißt: Der Sensor hat ein Gehäuse (5x5mm), das bezüglich der Vertikalen (Richtung der Erdanziehungskraft) eine Unter- und Oberseite aufweist.

Unabhängig davon, wie man den Sensor bzw. den kompletten Bissanzeiger zur Vertikalen dreht, erzeugt er eine bestimme Grundspannung. Irgendwann (nach einem "Fallbiss") hat sich Sensor um 90° aus seiner ursprünglichen Lage (Ruhelage) so gedreht bzw. geschwenkt, dass er nach dieser Lageänderung eine neue Grundspannung erzeugt. Diese Spannungsänderung kann danach von der Elektronik ausgewertet bzw. "gedeutet" werden.

Unter einem "dauerhaften Fallbiss" versteht man Folgendes: Nachdem der Bissanzeiger um 90 Grad sich gedreht oder geschwenkt wurde, wird dieser Zustand so lange zu erkennen sein, wie sich der Bissanzeiger in dieser Position befindet. "Dauerhaft" heißt: Bis der Angler Aufstellung und Einstellung der Angelrute neu vorgenommen hat.

Bei Bissanzeigern, die jetzt auf dem Markt verfügbar sind, ist es nur während der Entstehungsphase eines Fallbisses möglich, diesen zu detektieren. Ein "Swinger" (ebenso, wie der erfindungsgemäße Bissanzeiger) bewegt sich nach unten und treibt durch die Angelschnur das Rad an.

Die Gestehungskosten des erfindungsgemäßen Bissanzeigers sind gering. Seine Montage, sein Betrieb und seine Wartung sind einfach und problemlos. Die Bisserkennung erfolgt - wie erwähnt - durch feinste Zuckungen bzw. Bewegungen der Angelschnur, die über die Angelschnur und über das Schnur-Clipsystem direkt an die hoch-sensible Elektronik des Bissanzeigers übertragen werden. Zur Entlastung des Anglers beim Transport der Angel-Ausrüstung sollte die Größe des Bissanzeigers möglichst klein bemessen sein. Seine Stromversorgung sollte platzsparend klein sein und möglichst lange Betriebsdauer aufweisen, bevor eine neue Batterie eingesetzt werden muss. Zur Erkennung eines so genannten Fallbisses ist kein zusätzlicher Anbau bzw. Aufbau erforderlich, um dem Angler einen Fallbiss zu 100% zuverlässig und dauerhaft anzuzeigen.

Die Erfindung wird nachfolgend anhand einer bevorzugten Ausführungsform näher erläutert. Es zeigen:
- Fig. 1: eine schematische Darstellung der auf einem Angelrutenhalter 1 und eine Angelrutenablage 8 gelagerten Angel 2 bei gestraffter Angelschnur, an der das Gehäuse des erfindungsgemäßen Bissanzeigers 5 angebracht ist;
- Fig. 2: eine vergrößerte Teil-Darstellung der Anordnung des erfindungsgemäßen Bissanzeigers an der Angel;
- Fig. 3: eine schematische Darstellung der auf einem Angelrutenhalter 1 und eine Angelrutenablage 8 gelagerten Angel 2 bei gelockerter Angelschnur (9), an welcher das Gehäuse des erfindungsgemäßen Bissanzeigers 5 angebracht ist;
- Fig. 4: eine vergrößerte Teil-Darstellung der Anordnung des erfindungsgemäßen Bissanzeigers an der Angel 2 im Fall des Lösens des Bissanzeiger (5) bzw. des Schnurclipsystems 7 von der Angelschnur (9), verursacht durch einen starken Biss oder durch dauerhaftes Ziehen eines Fisches an der Angelschnur 9;
- Fig. 5: eine vergrößerte Teil-Darstellung der Anordnung des erfindungsgemäßen Bissanzeigers an der Angel 2 im Fall des Lösens des Bissanzeigers (5) bzw. des Schnurclipsystems 7 von der Angelschnur (9), verursacht durch einen Anschlag bzw. Anhieb der Angelrute 2;
- Fig.6: eine vergrößerte Ansicht des erfindungsgemäßen Bissanzeigers 5;
- Fig.7a: eine vergrößerte Detail-Seitenansicht des Schnur-Clipsystems 7 gemäß der Erfindung;
- Fig.7b: eine vergrößerte Detail-Draufsicht des Schnur-Clipsystems 7 gemäß der Erfindung und
- Fig. 8: eine Darstellung des elektronischen Schaltkreises und des erfindungsgemäßen Beschleunigungssensors B.

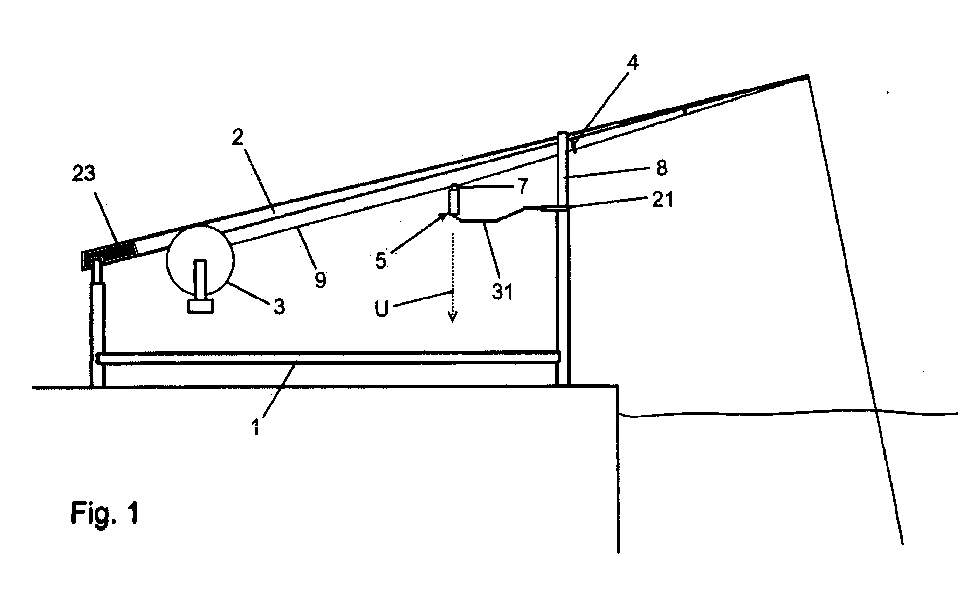

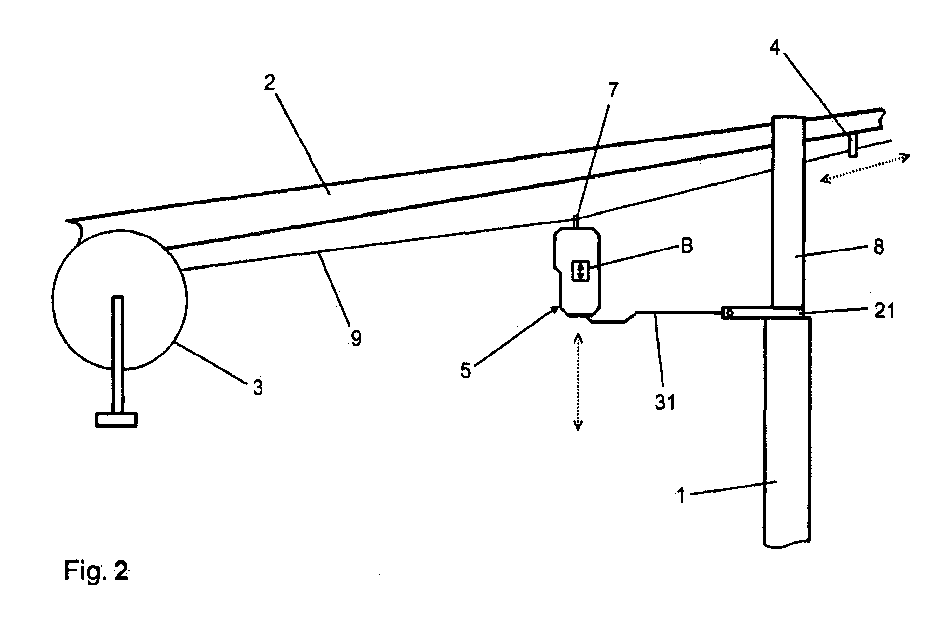

Die Fign. 1 und 2 zeigen einen handelsüblichen, höhenverstellbaren Angelrutenhalter 1 (einen so genannten "Rod-Pod" oder "Bank-Stick") mit einer Rutenablage 8. Bei normalem Angelbetrieb wird auf der Rutenablage 8 ist eine Angelrute 2 gelagert, an der eine Rolle 3 zum Aufrollen einer Angelschnur 9 angebracht ist.

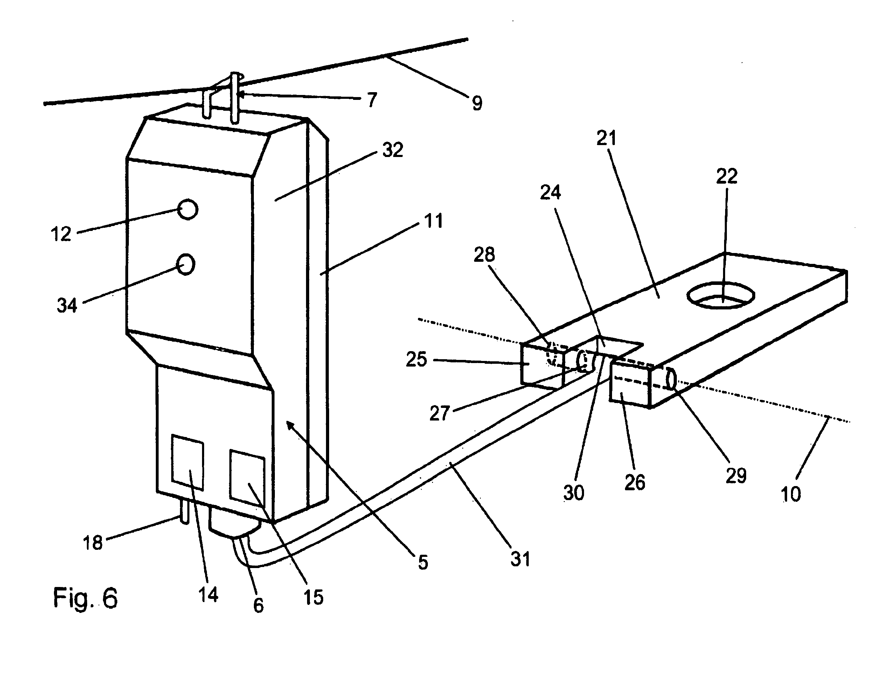

Wie Fig. 6 zeigt, ist zwischen dem Angelrutenhalter 1 und der Angelrutenablage 8 eine Konsole 21 festgeschraubt, deren in Richtung zum Angelrutengriff 23 vorspringendes Konsolteil in etwa parallel zur Angelrute 2 verläuft. Die Konsole 21 weist ein Montageloch 22 auf.

Die Konsole 21 weist an ihrem vorspringenden Ende eine möglichst mittig angeordnete Ausnehmung 24, so dass sich beiderseits derselben je ein Tragarm 25,26 bildet. Die Tragarme 25,26 sind durch eine Schwenkwelle 27 verbunden, wobei je ein Wellenende 28,29 an je einem der beiden Tragarme 25,26 gelagert ist.. An der Schwenkwelle 27 ist im Bereich der Ausnehmung 24 zwischen den beiden Tragarmen 25,26 ist das Ende 30 eines Schwenkarms 31 gelagert. Letzterer ist in Gebrauchslage (Ruhelage) des Angelrutenhalters 1 um die Schwenkachse 10 herum vertikal nach oben oder nach unten schwenkbar. Am Schwenkarm 31 ist anderendig das Unterteil eines Gehäuses 32 eines erfindungsgemäßen Bissanzeigers 5 fest angebracht. Am Oberteil des Gehäuses 32 ist ein sogenanntes Schnur-Clipsystem 7 angeordnet, das zur zeitweisen bzw. vorübergehenden Aufhängung des Bissanzeigers 5 an der Angelschnur 9 dient. Durch diese Anordnung "schwebt" der Bissanzeiger 5 auf der Angelschnur 9 und übt durch sein Eigengewicht auf die Angelschnur 9 eine gewisse Spannung aus.

Die Darstellung gemäß Fig. 1 zeigt die erfindungsgemäße Anordnung in ihrer Gebrauchslage (Ruhelage), wobei die Angelschnur 9 infolge der Zugkraft des mit einem Bleigewicht beschwerten Angelhakens straff gespannt ist.

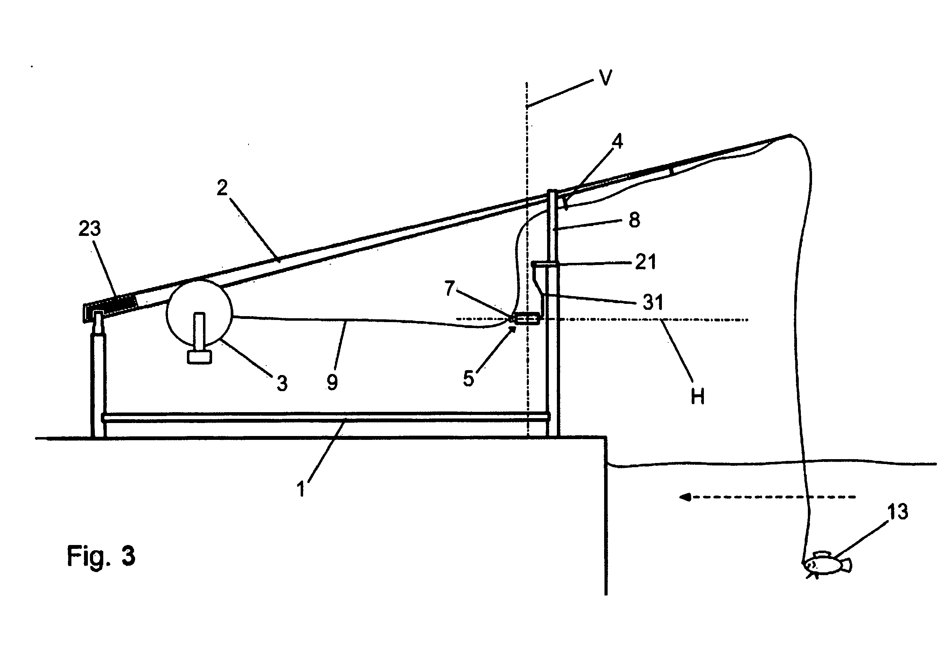

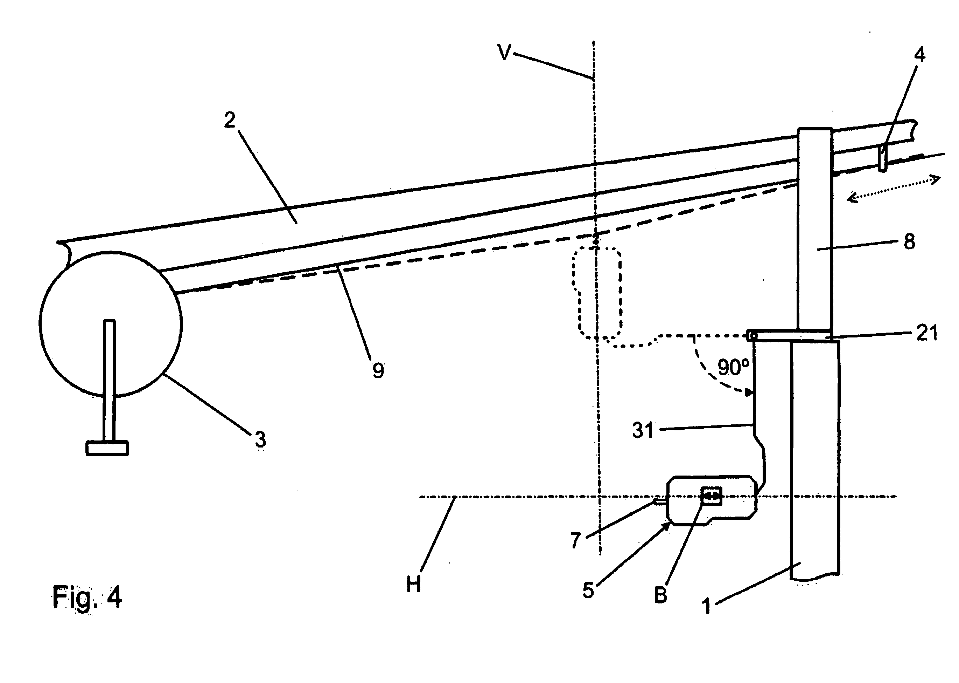

Fig. 3 zeigt die erfindungsgemäße Anordnung, nachdem ein Fisch 13 am tief im Wasser hängenden, blei-beschwerten Köder angebissen und erfasst hat und gerade dabei ist, ihn in die Uferzone zu transportieren. Dadurch wird die Angelschnur 9 derart entlastet, dass der daran hängende Bissanzeiger 5 infolge seines Gewichts die Angelschnur 9 nach unten zieht. Dadurch schwenkt der den Bissanzeiger 5 tragende Schwenkarm 31 um die Schwenkachse 10 der Schwenkwelle 27 um 90° nach unten, wie in Fig. 3 gezeigt ist ("Arbeitslage"). Durch den 90°-Schwenk des Schwenkarms 31 schwenkt die anfänglich vertikal verlaufende Hochachse H des Gehäuses 32 des Bissanzeigers 5 nach unten (Fign.1 und 2), wonach sie sodann horizontal verläuft (Fig. 3). Die Lageänderung des Bissanzeigers 5 ist schematisch in Fig. 4 dargestellt.

Durch Anbiss oder Zupfen am Angelköder und/oder durch den Transport desselben in seichtere Gewässer durch den Fisch 13 wird die Angelschnur 9 mehr oder weniger stark bewegt. Diese Bewegungen werden über die Angelschnur 9 und über an das an dieser hängende Schnur-Clipsystem 7 des Bissanzeigers 5 direkt an den Bissanzeiger 5 bzw. an die darin eingebaute Elektronik bzw. an den Beschleunigungs-Sensor B übertragen, wie nachfolgend beschrieben wird.

Die Elektronik des Bissanzeigers 5 wandelt mit Hilfe eines MEMS - Beschleunigungssensors B schon feinste bzw. kleinste auf die Angelschnur 9 einwirkende Bewegungen in elektrische Spannung um. Der Bissanzeiger 5 ist somit in der Lage, kleinste und ebenso einzelne Bewegungen bzw. Beschleunigungen zu detektieren. Jede Bewegung bzw. jeder Anbiss eines Fisches wird durch ein Nachblinken einer Signalleuchte 34 bzw. durch ein Nachpiepsen eines Summers 35 angezeigt. Die Information des letzten Bisses wird zugleich für den Angler 30 Sekunden lang abgespeichert. Diese Maßnahme entspannt den Angler, er muss nicht ständig unter hoher Konzentration die Angelschnur 9 bzw. die Angelrute 2 beobachten.

Ein MEMS (*Micro-Electro-Mechanical System*) ist eine kombinierte Anordnung aus mechanischen Elementen, wie Sensoren, Aktoren und elektronischen Schaltungen, auf einem Substrat bzw. Chip.

Anhand der Skizze in Fig. 2 wird die Detektion eines Fisch-Anbisses nochmals näher beschrieben. Bei einem Fisch-Anbiss wird die Angelschnur 9 durch die Angelschnur-Ring-Führung 4 hin- und herbewegt. Diese Horizontal-Bewegung wird am Bissanzeiger 5 in eine Vertikal-Bewegung umgesetzt- wie vorstehend beschrieben. Die so entstandene Vertikal-Bewegung wird vom MEMS-Beschleunigungssensor B erfasst. Die übrige Elektronik im Bissanzeiger 5 setzt diese Sensor-Signale in akustische und/oder optische Signale um.

Anhand der Fig. 3 wird der Fall eines so genannten "Fallbisses" näher beschrieben. Unter einem "Fallbiss" versteht man eine Situation, in welcher ein Fisch den Köder Richtung Ufer bzw. Richtung Angelrute 2 bewegt und an einer Stelle den Köder liegen lässt. In dieser Lage ist keine weitere Detektion der Bisse möglich. Der Bissanzeiger 5 übt nun keine Spannung mehr auf die Angelschnur 9 aus.

Hierbei würde das Gehäuse des Bissanzeigers 5 aus seiner ursprünglich vertikalen Lage in eine horizontale Lage um 90° herunter schwenken, wie vorstehend ausgeführt.

Anhand der Fig. 4 wird der Fall eines "starken Bisses" oder eines permanenten Ziehens eines Fisches 13 an der Angelschnur 9 näher beschrieben. In so einer Situation kann es vorkommen, dass sich der Bissanzeiger 5 bzw. das Schnur-Clipsystem 7 von der Angelschnur 9 löst. Hierbei würde die Hochachse H des Gehäuses 32 des Bissanzeigers 5 um 90° herab schwenken.

Der erfindungsgemäße Bissanzeiger 5 kann seine Lageänderung "erkennen". Sobald die Hochachse H des Bissanzeigers 5 um einen Winkel von 90° nach unten schwenkt, gibt der Beschleunigungssensor B eine bestimmte Spannung aus. Diese wird von der Elektronik in ein permanentes Blinken und Piepsen mit ca. 4 Hz umgesetzt. Durch diese aggressive Signalart wird der Angler gewahr, dass ein "Fallbiss" bzw. ein "starker Biss" vorliegt.

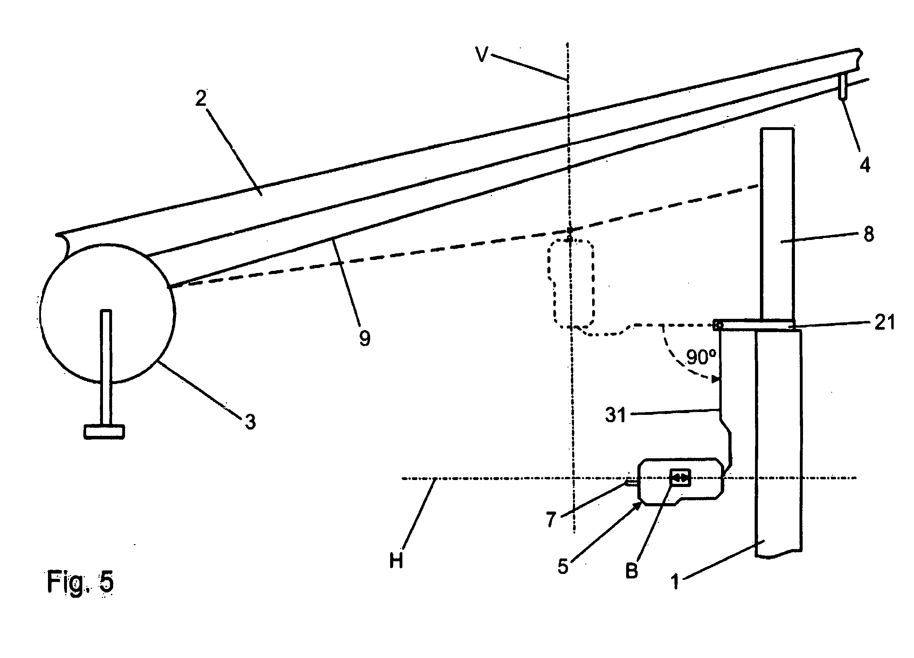

Fig. 5 zeigt den "Fall" bei einem Anschlag der Rute. Dabei muss sich das Schnur-Clipsystem 7 von der Angelschnur 9 lösen. Das Schnur-Clipsystem 7 ist speziell entwickelt für Monofile und geflochtene Angelschüre 9, die den Bissanzeiger 5 auf Spannung halten (Fig. 2) und die Angelschnur 9 direkt beim Anschlag entlässt (Fig. 5). Mit anderen Worten: Das Schnur-Clipsystem 7 ist mit dem Bissanzeiger 5 fest verbunden und kann dadurch Bewegungen der Angelschnur 9 an den Beschleunigungssensor B übertragen.

Fig. 6 zeigt den Aufbau des erfindungsgemäßen Bissanzeigers 5. Das Bissanzeiger-Schnur-Clipsystem 7 hat die Funktion, den Bissanzeiger 5 (das heißt: die Gesamtkonstruktion desselben) mit der Angelschnur 9 zu verbinden. Wenn die Angelrute 2 (Fign. 2 und 3) von der Rutenablage 8 abgenommen wird (Fig. 5), muss sich das Schnurclipsystem 7 von der Angelschnur 9 lösen können. Dies ist möglich, da die beiden Haltestifte des Schnur-Clipsystems 7 zueinander geringfügig versetzt montiert sind. Eine Signalleuchte 34 hat die Funktion, Bisse bzw. Bewegungen durch optische Signale darzustellen. Eine Summer-Öffnung 12 ist oberhalb des Summers 35 im Gehäuse 32 positioniert, damit das akustische Signal nicht zu stark gedämpft wird. An der Rückseite des Bissanzeigers 5 ist ein Batteriefach 11 für eine stromversorgende Batterie 17 vorgesehen. Über die beiden Tasten 14 und 15 ist es möglich, die Lautstärke des Summers 35 einzustellen bzw. die Empfindlichkeit des Bissanzeigers 5 an die Umgebung anzupassen.

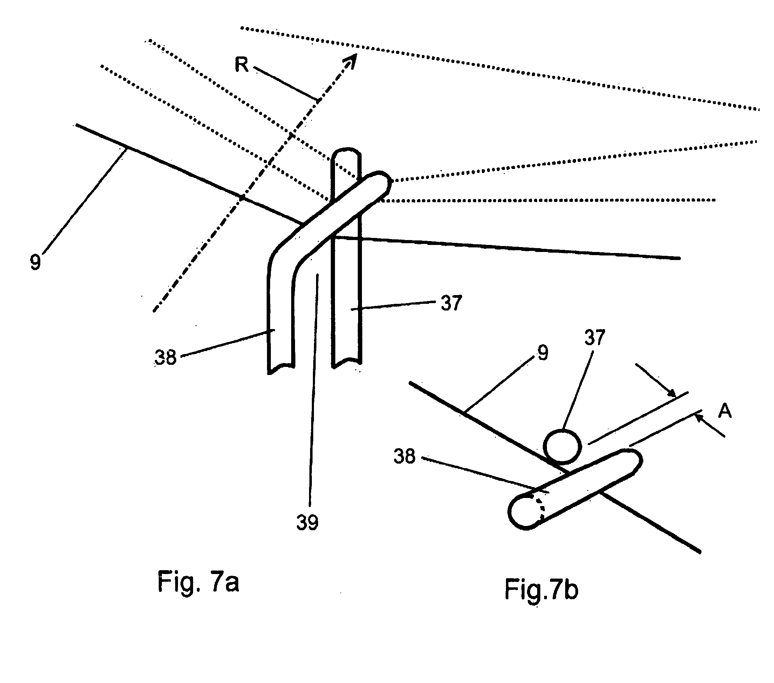

In zwei vergrößerten Ansichten gemäß den Fign. 7a und 7b ist ein Schnur-Clipsystems 7 gemäß der Erfindung dargestellt. Das Schnur-Clipsystem 7 weist an seinem in Gebrauchslage (Ruhelage) oben liegenden Kopfteil zwei in Abstand A von einander angeordnete Haltebolzen 37,38 auf. Durch den durch die beiden Haltebolzen 37,38 gebildeten Zwischenraum A ist in Gebrauchslage (Ruhelage) die Angelschnur 9 durchgeführt. Ein erster Haltebolzen 37 verläuft in Gebrauchslage (Ruhelage) geradlinig nach oben. Der zweite Haltebolzen 38 verläuft in Gebrauchslage (Ruhelage) ebenfalls nach oben, sein Ende ist aber angewinkelt, wie Fig. 7 zeigt. Beide voneinander beanstandeten Haltebolzen 37,38 bilden in Gebrauchslage (Ruhelage) nicht nur eine Art "Nadelöhr" oder "Führungsöse" 39 für die durch diese hindurch gefädelte Angelschnur 9, sondern halten den Bissanzeiger 5 an der Angelschnur 9 fest.

Infolge seines Eigengewichts und der Wirkung der Schwerkraft hängt der Bissanzeiger 5 in Gebrauchslage (Ruhelage) der Angelrute 2 an der Angelschnur 9 in Richtung U nach unten. Der Bissanzeiger 5 kann und wird sich in Gebrauchslage (Ruhelage) nicht von der zwischen den beiden Haltebolzen 37,38 eingefädelten Angelschnur 9 lösen.

Im Falle eines Anschlags, bzw. einer Abnahme der Angelrute 2 bzw. Einwirkung von höherer Zugkraft, in die Richtung R von der Rutenablage 8 muss es gewährleistet werden, dass sich die Angelschnur 9 vom Schnur-Clipsystem 7 lösen kann. Dies wird ermöglicht, weil die beiden Haltebolzen 37,38 des Schnur-Clipsystems zwischen sich einen Abstand A von ca. 1 Millimeter aufweisen. Die beiden Haltebolzen 37,38 sind aus rostfreien Materialen hergestellt. Somit können sie vor Beschädigung auch nach längerer Benutzung im Freien nicht korrodieren, was dem Schutz der Angelschnur 9 dient. Optimal ist Edelstahl, da Angelschnüre 9 eine gute Gleiteigenschaft auf Edelstahl aufweisen. Der 1 Millimeter große Abstand A garantiert gute Funktionalität [sicheres Lösen des Bissanzeigers 5] sowohl bei Monofilen, wie auch bei geflochtenen Angelschnüren 9.

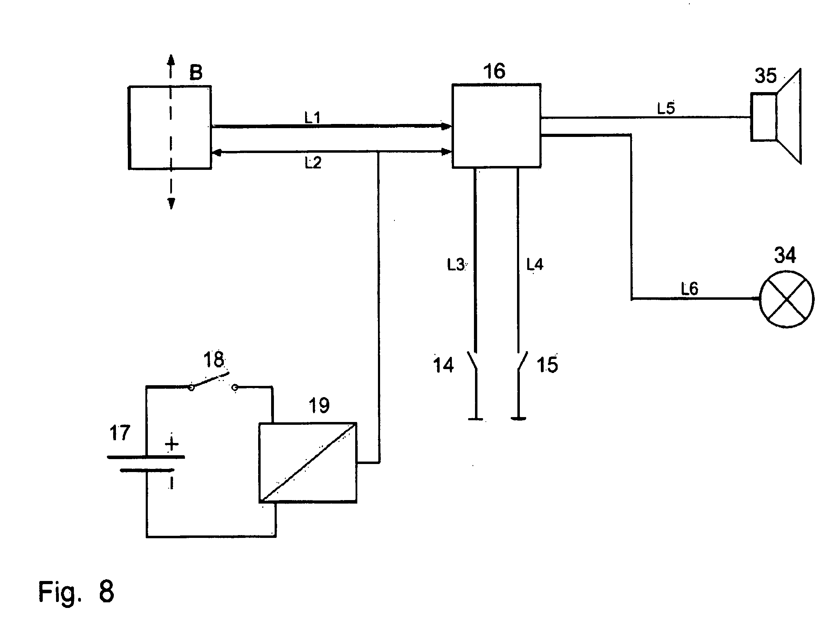

In Fig. 8 ist beispielhaft ein Blockschaltbild des Elektronik-Schaltkreises S gemäß der Erfindung dargestellt. Im Ruhezustand unabhängig zu der vertikal verlaufenden Hochachse H des Gehäuses 32 des Bissanzeigers 5 gibt der Sensor Spannungen zwischen 1,0 V und 1,5 V aus. Die kleinsten Bewegungen über die Angelschnur (Fig. 1, 2 und 3) werden in eine proportional große Spannung zu der Bewegung bzw. Beschleunigung umgewandelt. Diese Spannung wird auf die Grundspannung (verursacht durch die vertikale Anordnung der Hochachse H des Bissanzeigers 5) aufmoduliert bzw. aufaddiert. Das Signal des Beschleunigungssensors B wird durch die Leitung L1 zu einem Mikrokontroller 16 geleitet. Dabei erfährt der Mikrokontroller 16 durch die Grundspannung, durch die Lage des Beschleunigungssensors B ("Fallbiss"-Erkennung - Fig. 2) und durch auftretende Wechselspannungen eine eventuelle Bewegung des Bissanzeigers 5. Diese Informationen werden vom Mikrokontroller 16 über die Signalleitungen L5 und L6 an die Signalleuchte 34 und den Summer 35 weitergeleitet. Der Angler wird dadurch sowohl optisch als auch akustisch über einen erfolgten Anbiss eines Fisches 13 informiert und kann entsprechend der ihm übermittelten Situation entsprechend und rechtzeitig reagieren.

Die ganze Elektronik des Bissanzeigers 5 wird von einer 1,5 Volt-Batterie 17 versorgt Sie ist über einen Hauptschalter 18 mit einem Spannungskonverter 19 verbunden. Der Spannungskonverter 19 hat die Aufgabe, stabile 3,3 Volt-Spannung für den Mikrokontroller 16 und den Sensor B zu erzeugen. Um die Batteriespannung zu schonen, wird ein Mikrokontroller 16 der Firma Texas-Instruments® eingesetzt. Diese Familie der Mikrokontroller 16 ist auf höchste Strom-Sparsamkeit ausgerichtet. Durch entsprechendes Management wird der Mikrokontroller 16 nicht permanent betrieben. Sie bleibt nur alle 60 Millisekunden über etwa 200 Mikrosekunden lang eingeschaltet. Danach folgt die Auswertung der Sensordaten über die Leitung L1. Nach dem Auswerten werden der Summer 35 und die Signalleuchte 34 entsprechend der Sensorsignale angesteuert. Der Mikrokontroller 16 wird bis zum nächsten Zyklus ausgeschaltet.

Beim Angeln sind im Wesentlichen drei unterschiedliche Möglichkeiten denkbar, die wie folgt dargestellt werden sollen:
Fall 1 (gewünschter Fall):
   Der Fisch hat zugebissen, der Angler will den Fisch ans Land ziehen. Er muss die Angelrute in die Hand nehmen, dabei würde ihm der Bissanzeiger stören, er könnte die Schnur kaputt machen oder der Bissanzeiger (Clipsystem) könnte eventuell kaputt gehen. Der Bissanzeiger muss weg von der Angelschnur.
Fall 2 (ein großer Fisch hat angebissen, z.B. 10 kg schweren Karpfen):
   Der Karpfen hat stark zugebissen. Er zieht die Angelschnur plötzlich (mit sehr hoher Beschleunigung) in Richtung offenen Wasser. Diese Situation könnte eine schnelle Bewegung (senkrechte Bewegung) am Bissanzeiger verursachen. Das Schnur-Clipsystem könnte sich von der Angelschnur lösen bzw. aus dem "Nadelöhr" herausrutschen. Dieser Fall muss vom Angler unbedingt sofort wahrgenommen werden, da der Karpfen sonst die ganze Rute samt Zubehör ins Wasser ziehen könnte. In diesem Fall fällt der Bissanzeiger sofort nach unten. Es wird die "Fallbiss"-Stellung detektiert (was durch starkes, aggressives Blinken und Piepsen bei ca. 4Hz angezeigt wird). Sofern der Zug der Angelschnur nicht ausreicht, sie aus dem Schnur-Clipsystem herauszuziehen, würde das auch nichts weiter ausmachen. Durch das Ziehen des Fisches würden nämlich genug Vibrationen an der Angelschnur verursacht werden, um genug optische bzw. akustische Signale für den Angler zu erzeugen.
Fall 3 (könnte vorkommen, ist aber sehr unwahrscheinlich):
   Der Fisch zieht den Köder langsam Richtung Ufer (schleichender "Fallbiss") und entspannt dadurch langsam die Angelschnur. Irgendwann kommt es zu 90°-Stellung des Bissanzeigers, worunter man einen "Fallbiss" bezeichnet. Wenn vorher durch Blinken/Piepsen der Angler die Situation nicht gemerkt hätte, könnte die Angelschnur aus dem Schnur-Clipsystem herausrutschen. Dies könnte vorteilhaft sein, oder auch nicht. Es hängt von der Situation ab.

Vorteil: Der Angler will den Köder herausziehen, um ihn an eine neue Stelle zu werfen. Er muss den Bissanzeiger nicht durch Ziehen der Angelschnur zu entfernen.

Nachteil: Der Angler ist mit der Lage des Köders zufrieden. Er will nur die Angelschnur wieder anspannen. Aber er muss zuvor wieder den Bissanzeiger einhängen.

Ohne den Erfindungsgedanken wesentlich zu verändern, ist auch denkbar, die durch einen "Fallbiss" ausgelöste Anspannung bzw. Zuckungs-Bewegungen der Angelschnur 9 von einem Sensor erfasst und in entsprechende Funksignale umgesetzt werden. Die Funkdaten könnten durch geeignete Mittel (die hier nicht näher erläutert werden sollen) an entsprechende Empfangseinrichtungen gesandt werden, die akustische und/oder optische Signale erzeugen bzw. auslösen. Diese Signale würden es dem Angler ermöglichen, notwendige Maßnahmen zur Bergung des an der Angelschnur 9 hängenden Fisches 13 zu treffen.

Bei dem erfindungsgemäßen Bissanzeiger ergibt sich die Möglichkeit, über den Beschleunigungssensor sowohl seitliche als auch horizontale Bewegungen des Bissanzeigers (5) zu ermitteln. Dieses Signal könnte die Information beinhalten, dass es sich um eine Störung handelt, die aber dann auch als solche interpretiert und entsprechend verarbeitet werden muss. Somit könnte man Horizontalbewegungen des Bissanzeigers (5) ignorieren und diese als "Nicht-Bisse" interpretieren und entsprechend verarbeiten.

Es liegt kein Biss vor, das heißt es liegt eine Störung vor, wenn sich der Bissanzeiger (5) vertikal und horizontal bewegt. Demgegenüber liegt ein Biss vor, wenn sich der Bissanzeiger (5) ausschließlich vertikal bewegt.

Dementsprechend ist die Elektronik des Bissanzeigers (5) so ausgelegt, dass sie Horizontalbewegungen des Bissanzeigers (5) (beispielsweise hervorgerufen durch Seitenwinde) als Störfälle interpretiert und entsprechend als "Nicht-Bisse" registriert und entsprechend verarbeitet.

### Bezugszeichenliste

- 1: Angelrutenhalter
- 2: Angelrute
- 3: Rolle (für Angelschnur 9)
- 4: Angelruten-Führungs-Ring (für Angelschnur 9 - siehe Fig. 3)
- 5: Bissanzeiger
- 6: erstes Ende des Schwenkarms 31)
- 7: Schnur-Clipsystem (bestehend aus den beiden Haltebolzen 37,38)
- 8: Rutenablage
- 9: Angelschnur
- 10: Schwenkachse (von Schwenkwelle 27)
- 11: Batteriefach (für Batterie 17)
- 12: Öffnung (für Summer 35)
- 13: Fisch
- 14: Taste (zur Fein-Einstellung des Summers 35 und des Bissanzeigers 5)
- 15: Taste (zur Fein-Einstellung des Summers 35 und des Bissanzeigers 5)
- 16: Mikrokontroller
- 17: Batterie
- 18: Hauptschalter
- 19: Spannungskonverter
- 21: Konsol-Element (für Schwenkarm 31)
- 22: Loch (durch das Konsol-Element 21)
- 23: Angelrutengriff
- 24: Ausnehmung (in Konsole 21 für Schwenkarm 31)
- 25: erster Tragarm (in Konsole 21 für Schwenkwelle 27)
- 26: zweiter Tragarm (in Konsole 21 für Schwenkwelle 27)
- 27: Schwenkwelle (für Schwenkarm 31)
- 28: erstes Wellenende (von Schwenkwelle 27)
- 29: zweites Wellenende (von Schwenkwelle 27)
- 30: zweites Ende (von Schwenkarm 31)
- 31: Schwenkarm (für Gehäuse 32 mit Bissanzeiger 5)
- 32: Gehäuse (für Bissanzeiger 5)
- 34: Signalleuchte
- 35: Summer
- 37: erster Haltebolzen (von Schnur-Clipsystem 7)
- 38: zweiter Haltebolzen (von Schnur-Clipsystem 7)
- 39: "Nadelöhr" (zwischen den beiden Haltebolzen 37,38 für Angelschnur 9)
- B: MEMS - Beschleunigungssensor
- H: Hochachse (von Gehäuse 32 mit Bissanzeiger 5)
- V: Richtung der Erdanziehungskraft
- U: Zugrichtung (des Bissanzeigers 5)
- R: Zugrichtung der Angelschnur (beim Lösen vom Schnur-Clipsyst. 7)
- L1: Verbindungsleitung (zwischen Mikrokontroller 16 und Beschl.-sensor B)
- L2: Verbindungsleitung (zwischen Spannungskonverter 19, Mikrokontroller 16 und Beschleunigungssensor B)
- L3: Verbindungsleitung (zwischen Mikrokontroller 16 und Taste 14)
- L4: Verbindungsleitung (zwischen Mikrokontroller 16 und Taste 15)
- L5: Signalleitung (zwischen Mikrokontroller 16 und Summer 35)
- L6: Signalleitung (zwischen Mikrokontroller 16 und Signalleuchte 34)
- S: Elektronik-Schaltkreis

## Patentansprüche

1. Bissanzeiger mit einem Sensor zur Anzeige des Anbisses eines Fisches an einem Köder, der an der Angelschnur einer auf einem Angelrutenhalter aufsetzbaren Angel mit einer Rolle zum Aufrollen der Angelschnur angebracht ist,
(a) wobei der Sensor des Bissanzeigers (5) ein elektronischer Beschleunigungssensor (B) ist,
(b) wobei der Bissanzeiger (5) zwischen dem Angelrutenhalter (1) und der Angelrutenablage (8) befestigte Konsole (21) aufweist, die in Gebrauchslage in etwa horizontal vorspringt und in etwa parallel zur Angelrute (2) verläuft,
(c) wobei an der Konsole (21) eine in Gebrauchslage horizontal verlaufende, um die Schwenkachse (10) herum schwenkbare Schwenkwelle (27) vorgesehen ist,
(d) wobei an der Schwenkwelle (27) ein erstes Ende (30) eines Schwenkarms (31) schwenkbar gelagert ist, dessen anderes Ende (6) das Gehäuse (32) des Bissanzeigers (5) trägt,
(e) wobei am in Gebrauchslage oberen Kopfteil des Gehäuses (32) des Bissanzeigers (5) ein Schnur-Clipsystem (7) angebracht ist, das an der in Gebrauchslage gespannten Angelschnur (9) vorübergehend lösbar anhängbar ist, wobei die Hochachse (H) des Gehäuses (32) des Bissanzeigers (5) im Wesentlichen vertikal verläuft,
(f) wobei das Gehäuse (32) des am Schnur-Clipsystem (7) hängenden, am Schwenkarm (31) befestigten Bissanzeigers (5) während der Entspannung und des Durchhängens der Angelschnur (9) nach unten infolge eines Anbisses des Fisches (13) am Angelköder durch seine Schwerkraft um die Schwenkachse (10) um etwa 90° nach unten schwenkbar ist, wonach die Hochachse (H) des Gehäuses (32) des Bissanzeigers (5) im Wesentlichen horizontal verläuft, und
(g) wobei der Beschleunigungssensor (B) im Gehäuse (32) des Bissanzeigers (5) angeordnet ist, wo er Bewegungen, Erschütterungen oder ein Herunterschwenken des Bissanzeigers (5) registriert und dies zugleich in geeignete elektronische Stromimpulse umsetzt, auf die gegebenenfalls akustische und/oder optische Anzeigegerate (34, 35) ansprechen.

2. Bissanzeiger nach Anspruch 1, **dadurch gekennzeichnet, dass** das Schnur-Clipsystem (7) am Kopfteil des Gehäuses (32) des Bissanzeigers (5) aus zwei zueinander in Abstand (A) angeordneten Haltebolzen (37, 38) besteht, von denen ein erster Haltebolzen (37) in Gebrauchslage geradlinig ausgebildet ist und vertikal nach oben verläuft, und ein zweiter Haltebolzen (38) in Gebrauchslage zunächst geradlinig nach oben verläuft, dann aber in Richtung zum ersten Haltebolzen (37) winkelig abgebogen ist, derart, dass beide Haltebolzen (37,38) zusammen eine Art "Nadelöhr" bzw. Halteöse (39) bilden, durch die die Angelschnur (9) durchführbar ist, welche das Schnur-Clipsystem (7) und das an diesem befestigte Gehäuse (32) des Bissanzeigers (5) in deren Gebrauchslage hält.

3. Bissanzeiger nach Anspruch 1 oder 2, **dadurch gekennzeichnet, dass** die Elektronik (B) einen elektronischen Beschleunigungssensor (B) der Bauart MEMS aufweist, der aus einer kombinierten Anordnung aus mechanischen Elementen, wie Sensoren, Aktoren und elektronischen Schaltungen auf einem Substrat bzw. Chip besteht.

4. Bissanzeiger nach einem der Ansprüche 1 bis 3, **dadurch gekennzeichnet, dass** ein an der Angelschnur (9) der Angelrute (2) festgestellter Anbiss eines Fisches (13) von einem Sensor (B) erfassbar ist, der diese Bewegungen mit geeigneten Mitteln zu Signalen verarbeitet, die über Stromleitungen (L5, L6) oder auch über ein Sender-/Empfänger-System per Funk an akustische und/oder optische Signalgeräte (34, 35) übermittelbar sind, um dem Angler den Anbiss eines Fisches (13) anzuzeigen.

5. Bissanzeiger nach einem der Ansprüche 1 bis 4, **dadurch gekennzeichnet, dass** durch Elektronik des Bissanzeigers (5) ein "Fallbiss" automatisch erkennbar ist.

6. Bissanzeiger nach einem der Ansprüche 1 bis 5, **dadurch gekennzeichnet, dass** die Elektronik des Bissanzeigers (5) so ausgelegt ist, dass sie Horizontalbewegungen des Bissanzeigers (5), beispielsweise hervorgerufen durch Seitenwinde, als Störfälle interpretiert und entsprechend als "Nicht-Bisse" registriert und entsprechend verarbeitet.

## Claims

1. Bite indicator comprising a sensor for indicating that a fish has bitten a piece of bait that is attached to the fishing line of a fishing rod which can be placed on a fishing rod holder and has a reel for reeling in the fishing line,
(a) wherein the sensor of the bite indicator (5) is an electronic acceleration sensor (B),
(b) wherein the bite indicator (5) has a bracket (21) which is attached between the fishing rod holder (1) and the fishing rod rest (8) and which, in the position of use, protrudes approximately horizontally and runs approximately parallel to the fishing rod (2),
(c) wherein a pivoting shaft (27) which can pivot about the pivot axis (10) and runs horizontally in the position of use is provided on the bracket (21),
(d) wherein a first end (30) of a pivoting arm (31) is mounted pivotably on the pivoting shaft (27), the other end (6) of said pivoting arm carrying the housing (32) of the bite indicator (5),
(e) wherein a line clip system (7) is attached to the head part of the housing (32) of the bite indicator (5), said head part being located at the top in the position of use, and can be detachably suspended temporarily on the fishing line (9) which is tensioned in the position of use, the height axis (H) of the housing (32) of the bite indicator (5) running substantially vertically,
(f) wherein the housing (32) of the bite indicator (5) suspended on the line clip system (7) and attached to the pivoting arm (31) can be pivoted downwards through approximately 90° about the pivot axis (10) under the force of gravity as the fishing line (9) slackens and sags downwards as a result of the fish (13) biting the bait, after which the height axis (H) of the housing (32) of the bite indicator (5) runs substantially horizontally, and
(g) wherein the acceleration sensor (B) is arranged in the housing (32) of the bite indicator (5), where it registers movements, shaking or a downward pivoting of the bite indicator (5) and converts this simultaneously into suitable electronic current pulses, to which optionally acoustic and/or optical display devices (34, 35) react.

2. Bite indicator according to claim 1, **characterized in that** the line clip system (7) on the head part of the housing (32) of the bite indicator (5) consists of two retaining pins (37, 38) arranged at a distance (A) from one another, of which a first retaining pin (37) is straight and runs vertically upwards in the position of use (rest position) and a second retaining pin (38) initially runs straight upwards in the position of use but then is bent at an angle towards the first retaining pin (37) so that the two retaining pins (37, 38) together form a type of "needle eye" or retaining eye (39), through which it is possible to pass the fishing line (9) which holds the line clip system (7) and the housing (32) of the bite indicator (5) attached thereto in their position of use (rest position).

3. Bite indicator according to claim 1 or 2, **characterized in that** the electronics (B) comprise an electronic acceleration sensor (B) of the MEMS type, which consists of a combined arrangement of mechanical elements, such as sensors, actuators and electronic circuits on a substrate or chip.

4. Bite indicator according to one of claims 1 to 3, **characterized in that** a bite of a fish (13) on the fishing line (9) of the fishing rod (2) can be detected by a sensor (B) which processes these movements using suitable means to form signals which can be transmitted via power lines (L5, L6) or also via a transmitter/receiver system by radio to acoustic and/or optical signal devices (34, 35) in order to indicate the bite of a fish (13) to the angler.

5. Bite indicator according to one of claims 1 to 4, **characterized in that** a "drop bite" can be recognized automatically by electronics of the bite indicator (5).

6. Bite indicator according to one of claims 1 to 5, **characterized in that** the electronics of the bite indicator (5) are configured in such a way that they interpret horizontal movements of the bite indicator (5), for example brought about by side winds, as interference and accordingly register these as "non-bites" and process them accordingly.

## Revendications

1. Indicateur de touche comportant un capteur, destiné à signaler qu'un poisson a mordu à un appât monté sur la ligne de pêche d'une canne à pêche disposable sur un support de canne à pêche, avec un moulinet pour l'enroulement de la ligne de pêche, **caractérisé**
(a) **en ce que** le capteur de l'indicateur de touche (5) est un capteur d'accélération électronique (B),
(b) **en ce que** l'indicateur de touche (5) comporte une console (21) fixée entre le support de canne à pêche (1) et la réception de canne à pêche (8), laquelle fait saillie sensiblement horizontalement en position d'utilisation et s'étendant sensiblement parallèlement à la canne à pêche (2),
(c) **en ce qu'**il est prévu sur la console (21) un arbre (27) s'étendant horizontalement et pivotant autour de l'axe de pivotement (10) en position d'utilisation,
(d) **en ce qu'**une première extrémité (30) d'un bras pivotant (31) est montée de manière à pouvoir pivoter sur l'arbre pivotant (27), l'autre extrémité (6) de celui-ci supportant le boîtier (32) de l'indicateur de touche (5),
(e) **en ce qu'**en position d'utilisation, un système de clipsage du fil (7) est monté sur la pièce de tête supérieure du boîtier (32) de l'indicateur de touche (5), lequel peut être accroché provisoirement de manière amovible sur la ligne de pêche (9) tendue en position d'utilisation, l'axe normal (H) du boîtier (32) de l'indicateur de touche (5) s'étendant sensiblement verticalement,
(f) **en ce que** le boîtier (32) de l'indicateur de touche (5) suspendu au système de clipsage du fil (7), fixé sur le bras pivotant (31) pendant la détente et le relâchement de la ligne de pêche (9) peut, suite à une morsure de l'appât par un poisson (13), pivoter sous l'effet de la gravité de quelque 90 ° vers le bas autour de l'axe de pivotement (10), ce après quoi l'axe normal (H) du boîtier (32) de l'indicateur de touche (5) s'étend sensiblement horizontalement, et
(g) **en ce que** le capteur d'accélération (B) est disposé dans le boîtier (32) de l'indicateur de touche (5), où il enregistre des mouvements, des secousses ou un rabattement de l'indicateur de touche (5), et transforme ceux-ci simultanément en impulsions de courant électroniques appropriées, auxquelles réagissent les appareils indicateurs acoustiques et/ou optiques (34, 35) éventuellement raccordés.

2. Indicateur de touche selon la revendication 1, **caractérisé en ce que** le système de clipsage du fil (7) sur la pièce de tête du boîtier (32) de l'indicateur de touche (5) se compose de deux boulons de maintien (37, 38) espacés entre eux d'une distance (A), dont un premier boulon de maintien (37) est réalisé linéairement et s'étend verticalement vers le haut en position d'utilisation, et un deuxième boulon de maintien (38) s'étend d'abord linéairement vers le haut avant d'être plié angulairement vers le premier boulon de maintien (37) en position d'utilisation, de telle manière que les deux boulons de maintien (37,38) forment ensemble une sorte de « chas d'aiguille » ou d'oeillet de retenue (39) par lequel peut être passée la ligne de pêche (9), et qui maintient le système de clipsage du fil (7) et le boîtier (32) de l'indicateur de touche (5) fixé sur celui-ci dans leur position d'utilisation.

3. Indicateur de touche selon la revendication 1 ou la revendication 2, **caractérisé en ce que** l'électronique (B) comprend un capteur d'accélération électronique (B) de type MEMS, composé d'une combinaison d'éléments mécaniques tels que capteurs, actionneurs et circuits électroniques sur un substrat ou une puce.

4. Indicateur de touche selon l'une des revendications 1 à 3, **caractérisé en ce qu'**une morsure d'un poisson (13) constatée sur la ligne de pêche (9) de la canne à pêche (2) est détectable par un capteur (B) qui transforme par des moyens adaptés ces mouvements en signaux transmissibles via des lignes de courant (L5, L6) ou par radio via un système d'émetteur/récepteur à des appareils de signalisation acoustique et/ou optique (34, 35), ceci afin de signaler au pêcheur qu'un poisson (13) mord.

5. Indicateur de touche selon l'une des revendications 1 à 4, **caractérisé en ce qu'**une « touche » est automatiquement détectée par l'électronique de l'indicateur de touche (5).

6. Indicateur de touche selon l'une des revendications 1 à 5, **caractérisé en ce que** l'électronique de l'indicateur de touche (5) est conçue de manière à interpréter comme fausses alertes des mouvements horizontaux de l'indicateur de touche (5), suscités notamment par des vents latéraux, à les enregistrer comme « non-touches » et à les traiter en conséquence.
